# EUROPEAN PATENT APPLICATION

(11) **EP 1 359 399 A2**
(43) Date of publication of application: **05.11.2003**
(21) Application number: 03252660.0
(22) Date of filing: 26.04.2003
(51) Int. Cl.: G01J 3/46, G01J 3/52

(54) **Color matching and simulation of multicolor surfaces**

(30) Priority: 02.05.2002 US 377427 P
(71) Applicant: ROHM AND HAAS COMPANY, Philadelphia, Pennsylvania 19106-2399 (US)
(72) Inventor: O'Neill, Julia Catherine, Glenside, Pennsylvania 19038 (US); Anderson, Andrea Maureen, Reading, Pennsylvania 19606 (US); Danenhower, Irene, Mohrsville, Pennsylvania 19541 (US); Fotiou, James George, Reading, Pennsylvania 19611 (US); Francis, Elizabeth Dibartolomeo, Birdsboro, Pennsylvania 19508 (US); Greth, Judith Ann, Temple, Pennsylvania 19560 (US); Reffner, John Richard, N. Wales, Pennsylvania 19454 (US); Hummel, Michael John, Reading, Pennsylvania 19606 (US); Reffner, John Richard, N. Wales, Pennsylvania 19454 (US)
(74) Representative: Kent, Venetia Katherine

(57) **Abstract**

A method for simulating the final finish of a multi-component finish material comprises submitting or receiving a request describing a desired single or multicolor surface appearance in a finish simulator to generate one or more simulated appearance samples, obtaining feedback on said simulated appearance sample and, if necessary, modifying said sample to simulate said desired surface appearance. The finish simulator comprises a library of finish templates that have been produced and software or processing means to apply rules to adjust the simulated finish for known changes in chemistry, composition, and application conditions. In addition, the appearance of an actual multicolor sample is reproduced by separating the sample into areas of different individual colors, identifying the individual color of each of said areas, translating said individual area colors into color values that correspond to those in a database of colors that have been produced, and searching the database for existing colors that are close matches for those in the sample. The final finish of the closely matching colors is preferably simulated and assessed electronically using a finish simulator. The method of the present invention reduces the total time necessary to generate a multi-component color finish to match a given sample and can eliminate the need for making trial finishes in assessing color finishes for matching.

## Description

### FIELD OF THE INVENTION

The present invention relates to matching the appearance of a multicolor sample and to simulating the appearance of a multicolor surface. In particular, the present invention provides a process for identifying individual colors that can be combined to reproduce the appearance of the multicolor sample and for simulating the appearance of a multi-component color finish.

### BACKGROUND OF THE INVENTION

Formulating a coating, for example a powder coating, to match the appearance of a multicolor sample or achieve a desired multi-component final finish has proven to be extremely difficult and time consuming. The final appearance of a multicolor coated finish (hereinafter "final finish") is a complex function of the variables encountered in formulating a coating and making the final finish and of the relationship of these variables to the often subjective appearance attributes of the final finish. As a result, matching the appearance of a multicolor sample or of a desired final finish is conventionally performed manually in a process which requires many, repeated attempts at matching.

The final finish of a multi-component coating may depend upon one or more "formulation variables" that define the composition of the coating. For example, in formulating powder coatings, a multi-component finish may be produced by combining at least two color components, e.g. by dry-blending, before application and cure as a single layer. Although some color blending may occur in combining at least two color components, color components generally do not mix to form a single blended color in the final surface and speckles of each component color remain in the cured coating. Accordingly, the final finish of a multicolor coating may depend upon the distribution and blending of the color components in a powder coating. In addition, the final finish of a multi-component coating may depend upon the physical characteristics of color components, including their size and texture, which may vary from manufacturer to manufacturer. Further, the final finish of a multi-component coating may depend upon the chemistry of one or more components or of mixtures of two or more such components used in the formulation.

Given a single multi-component coating formulation, the final finish of such a formulation may depend upon one or more "processing variables." For example, the final finish of a multi-component powder coating may depend upon the method of application, e.g. spray gun type, charge and tip, and on the density of coverage. Further, the final finish of a multi-component coating may depend on the process of combination and welding under heat to form the final finish, affecting the final color through both the chemical reaction and/or inter-flow of agents.

In matching a multicolor sample or in simulating a desired final finish, the most important formulation and processing variables may vary from case to case and one or several of these variables may affect several attributes (hereinafter "appearance attributes") of a final finish. Appearance attributes may include gloss, texture, colors, coarseness, visibility of metallic sparkles, etc. However, some appearance attributes can only be assessed subjectively by human observers, making them difficult to quantify.

The final finish is ultimately evaluated on a subjective basis by human judges who make their final assessment based on overall appearance. The human eye and brain synthesize a complex combination of observations of individual attributes to make this assessment. Accordingly, discerning the most important formulation or processing effects becomes very complex. Determining the combination of changes necessary to achieve a desired surface appearance requires tremendous experience and a "knack" which cannot readily be taught to others. The process of achieving a finish appearance also typically requires many hours of laboratory work, and produces waste trial finish materials which must be disposed of.

Conventionally, the process of reproducing a desired appearance in a multi-component sample using a powder coating requires an artisan (hereinafter "formulator") to formulate a blend of color components (hereinafter "formulation") and make a "trial" finish to be matched by eye to a sample or a finish description, followed by adjusting to account for any visible or measurable differences between sample and trial finish. In adjusting to match a multicolor sample, a formulator may test changes to the chemical make-up of the finish, called formulation variables, and/or to the conditions under which the finish is applied or cured, called processing variables. However, these changes often affect multiple appearance attributes of the finish and it is very difficult to assess the impact of the formulation changes on multiple attributes simultaneously. After several formulation changes, the formulator will have a number of panels to assess, with multiple attributes changing among them.

When a single-color sample is to be matched, spectrophotometers are used routinely to measure the sample's reflectance curve and then estimate its values in a standard color space. When a multicolor sample is submitted for color and appearance matching, the individual colors of the sample must be measured precisely to identify components which match those colors. However, the viewing area of a standard spectrophotometer is too large to separately identify colors in finishes with homogeneous color areas having a smallest dimension of less than about 100 µm.

Using instruments to simulate or match a color sample or finish has proven impracticable because of the incredible complexity of the appearance attributes of such coatings. McKnight et al. at the National Institute of Standards and Technology proposed the use of several advanced measuring devices, e.g. scanning acoustic microscopes, in combination to numerically model the appearance of a single color pigmented coating. McKnight et al., "Advanced methods and models for describing coating appearance," Progress in Organic Coatings 34 (1998), 152-159. Even with the benefit of such devices, modeling a pigmented coating would require extensive statistical analysis of the data given by the devices. No actual numerical model or process for describing pigmented coatings has been developed.

A micro-spectrophotometer may be used to measure the reflectance curve and identify the color values of small homogeneous color areas in a surface finish. However, in a given multi-component color surface, many appearance attributes cannot be accounted for by a micro-spectrophotometer. For example, separating and identifying individual colors with a micro-spectrophotometer does not account for the blending effects of multiple colors at the borders of their homogeneous color areas. Further, a micro-spectrophotometer cannot simulate the final finish of a selected formulation. Consequently, color sample matching or simulation of a final finish using a micro-spectrophotometer still requires "trial and error" generation of several trial formulations of the color components.

Minimizing the number of iterations involved in the processes of matching the appearance of a submitted multi-component color sample or a final finish description, e.g. to speed identification of critical formulation and attribute changes in matching a given sample, will speed up the process of matching desired finish appearances. Faster matches have a greater chance of acceptance by customers and purchasing agents. Further, a method for simulating the appearance of a proposed formula so as to match a multi-component color sample or description without actually producing the final finish in the laboratory would greatly reduce time and material expense in reproducing a multi-component color sample or in producing a desired final finish.

### STATEMENT OF THE INVENTION

In accordance with the present invention, simulating the appearance of a single color or multicolor surface comprises receiving a request describing a desired single color or multicolor surface appearance, applying said description to a finish simulator to generate one or more simulated appearance samples, obtaining feedback on the simulated appearance samples and, if necessary, modifying the simulated appearance sample to simulate the desired surface appearance.

A method for constructing a finish simulator in accordance with an embodiment of the present invention comprises creating a library of finish templates that have been produced using known chemistry, and implementing rules to adjust the simulated finish for known changes in chemistry, composition, and application conditions. Preferably, a finish simulator comprises a multicolor finish simulator.

In accordance with another embodiment of the present invention, reproducing the appearance of a sample multicolor surface comprises separating the multicolor surface into areas of different individual colors, identifying the individual color of each area, translating said individual colors into color values that correspond to those in a database of colors that have been produced (hereinafter "database of colors"), and searching the database for existing colors that are close matches for each color in the multicolor sample. Preferably, identifying the individual color of each area comprises calculating area fractions for each color area.

### BRIEF DESCRIPTION OF THE DRAWINGS

Other aspects, features, and advantages of the present invention will become more fully apparent from the following detailed description, the appended claims, and the accompanying drawings in which:
FIG. 1 depicts a block diagram of a color matching system operating in accordance with an embodiment of the present invention;
FIG. 2 depicts a block diagram of a method for simulating a finish in accordance with an embodiment of the present invention.
FIG. 3 depicts a method for constructing a library of finish templates in accordance with an embodiment of the present invention.
FIG. 4 depicts a finish simulator dialog window in accordance with an embodiment of the present invention.

### DETAILED DESCRIPTION OF THE INVENTION

The present invention simplifies the design of multi-component finishes, providing a method for matching the appearance of an actual multicolor sample with a selected coating formulation and for simulating the final finish of any selected formulation to assess how well it matches any desired single color surface or multicolor surface, including a multicolor sample. In simulating a final finish, a method is provided for electronically designing and assessing the final finish of a multi-component coating formulation.

Simulation of a final finish of a multi-component color surface affords a wealth of practical advantages over the current practice of designing a finish to a desired appearance. For example, designers may incorporate simulated multi-component finishes in accordance with the present invention into computer-generated representations of coated products, e.g. in CAD software for incorporation in simulation of items such as coated furniture and automobiles. Customers may submit product development requests via a formulator's website, and to submit a computer rendering of the desired color along with a Product Development Request (PDR).

Customers and/or partners of formulators, may view simulated samples electronically, effectively distributing colors on the internet. For example, a formulator can provide side-by-side images of an original scanned sample next to the simulated appearance sample. "Color shifts" for particular monitors would at least be consistent for such side-by-side viewing. For key customers and partners, monitors, scanners, and printers can be calibrated to minimize "color shift", i.e. a difference in the appearance of a given color as depicted by different color input and/or output devices. Paper simulated finishes may be printed on photographic quality printers.

As used herein, "database of colors" includes reflectance curves, color space values, and formulations of existing manufactured colors.

As used herein, an "electronic image" is any electronically stored image of a multi- color surface, such as a scanned image or a digital photograph.

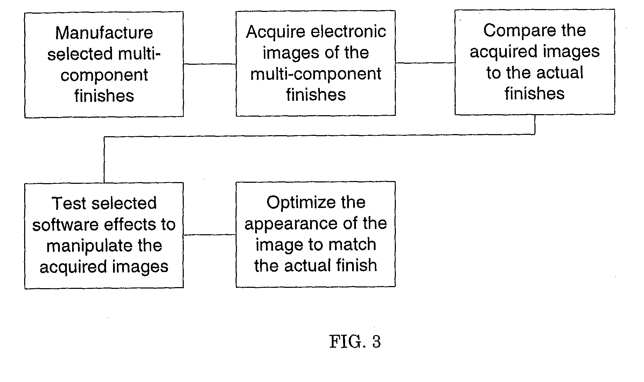

As used herein, the "library of finish templates" refers to a database of images of single color and multicolor finishes that have been produced. The template images in the library represent an array of existing finishes that have been produced or developed in the laboratory or by manufacturing equipment using known formulas, processing conditions, and application conditions. The template images in the library comprise electronic images of finishes that have been produced, wherein each image has been adjusted by testing selected software effects (e.g. Adobe Photoshop) to manipulate the image so it matches the appearance of the actual finish it represents. The process for constructing the library of existing templates is diagrammed in Fig. 3.

As used herein, a "multi-component finish material" may be a powder coating, ink, paint, or similar mixture composed of multiple components.

As used herein, a "multicolor surface", "actual sample" or "multicolor sample" means, respectively, a surface or a sample having multiple discrete color components, including, but not limited to, electronic images, coatings, films, paintings, prints, textiles, photographs, electronic images, stone, ceramic, glass, earth, clay, wood, bark, metal, tiles, laminates thereof, combinations thereof, multiple layer surfaces thereof, articles made there from and pieces of hardware.

As used herein a "single color finish" or "single color surface" is any finish in one color, e.g. a color made from a blend of colors, or a description, sample or electronic image thereof.

In a method of simulating a final finish according to the present invention, final finishes may be simulated from templates selected from a library of template images. The finish simulator adjusts template images using image manipulation software or electronic processing means to implement rules to adjust a simulated finish for known changes in chemistry, composition and application techniques. Such rules are based on statistical techniques including the method of paired comparisons and multi-dimensional scaling. Several final finishes may be simulated and compared to any submitted electronic sample or other description of a desired multicolor surface, again using statistical comparison techniques.

In accordance with a preferred embodiment of the present invention, a finish simulator is a multicolor finish simulator comprising a library of finish templates and software or other electronic device, such as a data processor, for applying rules developed to adjust the simulated finish for known changes in chemistry, composition, and application conditions. A finish simulator enables the formulator to fashion any desired final finish without having to make any "trial" final finish in the laboratory and to deliver an image of the simulated final finish in electronic form. The simulator may adjust the template to change the color of one or more component colors (e.g., lighten, darken, or change hue) based on user information supplied with the user input data. The simulator may further adjust the template to add special effects, such as texture, as directed by the user. Finally, the simulator may adjust the image of the simulated final finish, if necessary, to simulate a desired surface appearance, i.e. fine tune the simulated appearance sample. A user may input information or select a different template for modification to direct fine-tuning adjustment of a simulated sample or the finish simulator may present choices to enable the user to select fine-tuning adjustments, e.g. in a dialog window.

A finish simulator may be coupled to one or more actual or simulated sample generators, such as a factory component generator which generates a finish material or an actual sample, or a local sample generator or web-based or PC-based color image display which generates simulated finishes. A factory component generator may be a factory inventory system, or other computer controlled system that generates orders for color components or selects/applies color components to form physical multi-component coated finishes, or even a specially designed machine that forms the actual multi-component coated finish on a surface. A local sample generator may be a local display/color printer. Preferably, a finish simulator further comprises a web-based color image display, for example, a personal computer interface with a web-site via, for example, the Internet that users input sample or color match data and view simulated multi-component coated finishes on a computer display.

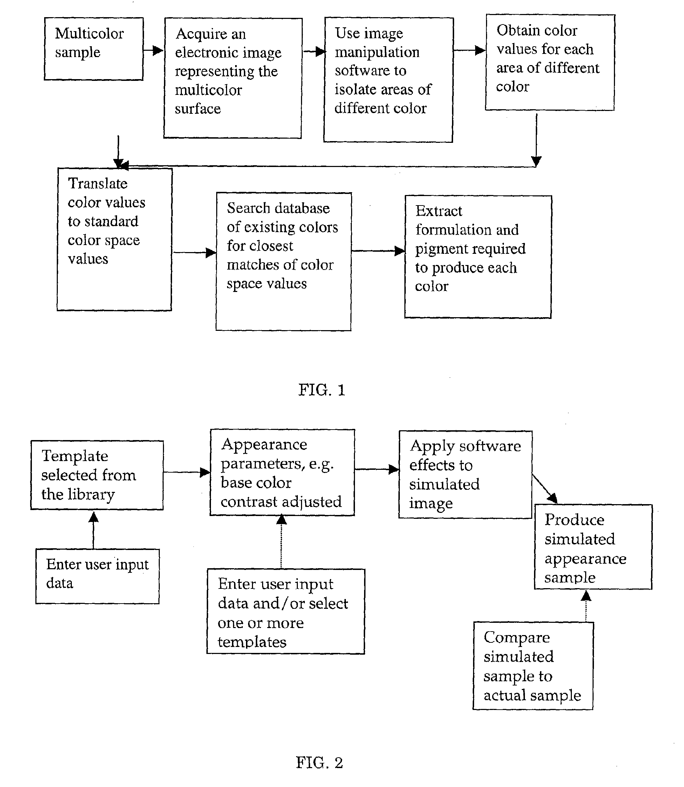

In an embodiment of the method of simulating a finish according to the present invention shown in Fig. 2, a user inputs data comprising a request describing a desired surface appearance (hereinafter "user input data"). Such user input data may range from a general appearance description to a very technical one. User input data may comprise color component information and one or more of particle parameters (e.g., size and distribution), color area fractions, texture, gloss, and other color sample characteristics representing achievable multi-component coated finishes of known composition. Alternatively, user input data may consist of an electronic image or a sample multicolor surface or it may comprise a narrative description of a desired surface, e.g. a black granite finish or a mottled sea coral finish, or it may comprise a description of two or more colors that are separated and identified from a multicolor surface or sample. In addition, user input data may include separate information as to the composition of the physical multi-component coated finish corresponding to the desired surface. User input data may also comprise color values generated in the method of reproducing the appearance of a multicolor surface.

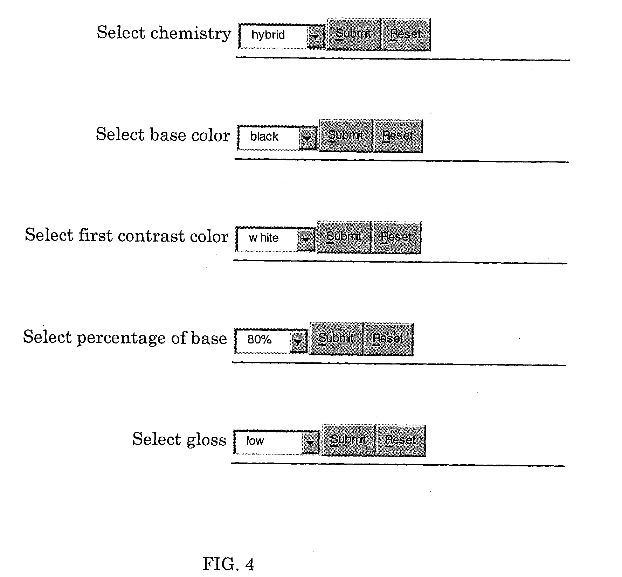

Once the user input data has been entered, the finish simulator selects one or more templates from which to simulate a desired appearance. Alternatively, as shown in Fig. 2, users may select one or more finish templates to modify for simulating a desired finish. Achieving realistic simulated finishes desirably uses a large library of virtual color templates. A given template may be selected, for example, based on color, chemistry, particle characteristics, gloss, texture, or substrate. Thus, users may access the library of templates indirectly, for example via user input data windows, or directly for example, via click and drag operations in a PC program. Further, users can input data to manipulate a selected template, e.g. by changing hue or changing a contrast color or base color. An embodiment of a web page presenting the dialog window for controlling the finish simulator through user input is shown in Fig. 4. Accordingly, a "user" can be a customer and/or a formulator.

Adding special effects and/or changing one or more colors indicated within a template creates changes and/or special effects in the final multi-component coated finish in a manner determined based on statistical paired comparison techniques. Special effects include the effects of different substrates on the final coated finish appearance, film thickness, mixture of different base colors and contrast colors, variation in proportions of base and contrast colors, particle size distribution of powder coatings, application techniques (e.g., gun tip shape, cure temperature, and cure time for powder coatings), metallic finish, appearance changes caused by weathering, texture effects such as wrinkles, and gloss. Special effects and color adjustments may be effectively made, for example, through the use of software which manipulates a template image to match the description of a finish specified by a user. Adjustments to any template are preferably made using rules developed to adjust a simulated finish for known changes in chemistry, composition and application conditions. Such rules are based on information derived using the paired comparison technique and on multi-dimensional scaling.

The paired comparison technique and its extensions are based on visual assessment of many samples by human judges. With relatively few samples, each pair is presented in turn to a judge for assessment. With many samples, the assessment may be performed simultaneously by sorting the samples into sets, then assessing the dissimilarity of each pair of sets. Samples that are indistinguishable to the judge are given dissimilarity ratings of 0; the dissimilarity between other samples is rated on an ordinal scale. The method of paired comparisons is described in, for example, Herbert A David, "The Method of Paired Comparisons," Griffen/Oxford, the teachings of which are incorporated by reference. The method of paired comparisons is employed for cases when the judgment of primary importance, such as acceptability of appearance, may be made only subjectively. Quantitative measurements may also be made, but quantitative measurements do not directly predict the acceptance of a particular sample. The method is employed in sensory testing, consumer tests, personnel ratings, and choice behavior. If it is easy for a judge to compare many samples at once, a simple ranking may be adequate. However, when the differences between samples are small or the judgments are based on a complex combination of sample characteristics, paired comparison techniques are preferred.

Dissimilarity judgments from the methods of paired comparison are converted into positions in geometric space by multidimensional scaling. Multidimensional scaling treats the dissimilarities between pairs of subjects being compared, e.g. colors, as distances, then calculates the optimum "location" for each sample, to simultaneously approximate the "distances" among every pair of samples . This provides a graphical display of the essential structure of the sample characteristics from which measures may be generated. The spatial dimensions are statistically correlated to observable properties of the samples, such as overall color, distinctness of effects, or gloss. Spatial dimensions may also be correlated to known composition properties or to application techniques to provide measures.

Standard colors provided through the library of finish templates and in the database of colors may be streamlined to a smaller, essential set of color components by selecting colors using space-filling U-optimal statistical design algorithms. An optimal space-filling essential set of standard colors may also be used as the basis for adjusting color values between color analysis of a color sample with a spectrophotometer and electronically determined color analysis with scanner. The coverage of the essential set over the color space may be greater in the lighter half of a color space, e.g. CIELAB, to support greater sensitivity to color variations in this range.

The output or feedback of the finish simulator, a simulated appearance sample and/or a description of a finish material that will match a desired finish, may be accessed via a simulated sample generator or a computer monitor or any visual display device. A simulated sample generator converts the output of the finish simulator into a visual image of the simulated multi-component coated finish for display on a local sample generator, which may be a computer screen or color printer. A simulated sample generator may be calibrated to ensure accurate visual reproduction of the multi-component coated finish.

Users may also view feedback, simulated samples or descriptions of finish materials electronically as Web-based color image display via a telecommunications network medium, such as an intranet, the Internet and/or the world-wide web. For a Web-based system, users may access a template library, or may even provide scanned samples as electronic images to an image component processor. Distribution of colors on the Internet may be subject to variations in color due to conversion between un-calibrated devices operating with different color spaces. To allow for remote comparison, side-by-side images of a user's requested finish and the simulated appearance sample may be provided. "Color shifts" for particular monitors may be consistent using this side-by-side viewing technique. In addition, more accurate color representations may be provided to key customers or partners by calibrating the sample viewing devices.

The present invention enables the mass customization of multi-component coating finishes in one or more colors. A factory component generator may provide feedback to users that identifies a multi-component finish material required to create a finish having a desired appearance. Such feedback information may identify the various color components, processing temperatures, texturing agents, particle sizes or liquid concentrations, mixture proportions, chemistries, and other production factors required to create a finish having a requested appearance. Application techniques specific to the finish, such as spray gun tip for powder coatings, may also be provided to users. Users may obtain coating components separately, and mix them according to proportions determined by the finish simulator to achieve the desired appearance.

In another embodiment of the present invention, the information from a factory component generator may be coupled directly to factory equipment, allowing for both automated ordering of multi-component coated finish ingredients and control of machinery applying the multi-component coated finish.

In accordance with another embodiment of the method of the present invention, the appearance of an actual multi-component color surface or sample (hereinafter "actual sample") may be reproduced by separately identifying areas of different individual colors in the sample. This method uses electronic imaging, image manipulation software, and statistical methods for appearance assessment. In contrast to prior art methods that require repeated "trial and error" generation of finishes in an iterative, manual assessment of color matching, the method of the present invention streamlines the design process for reproducing a multi-component finish. By providing a coating formulation that is a close match for an actual sample, the method of the present invention reduces the total time necessary to generate a multi-component color finish to match a given sample and reduces the number of trial finishes needed to make the match. This increases productivity while also decreasing non-acceptance of a multi-component finish in an actual sample. Preferably, the final finish of a formulation identified in the database of colors is simulated and matched to an electronic image of the sample to be matched. This eliminates the necessity of producing and testing trial finishes in the laboratory.

In another embodiment of the present invention, shown in Fig. 1, reproducing the appearance of an actual sample employs the acquisition and processing of an electronic image of a sample whose appearance is to be matched. The first stage involves acquiring an electronic image of a submitted multicolor sample. The image is then processed using software to isolate and identify its component colors. The component colors are translated into color values, e.g. values in a standard color space. These color values are submitted to a database of existing finishes and the database is searched to identify pigment and chemistry formulations or color formulations which will produce the desired component colors. To avoid the time and expense of producing and testing a finish in the laboratory, the final finish of a formulation identified in the database is preferably simulated and matched to an electronic image of the sample to be matched. Finally, actual final finishes made from formulations identified in the database can be manufactured and assessed to see if they match the submitted sample.

To illustrate the method of the present invention for reproducing the appearance of a color sample, an apparatus that may be used to practice the method of reproducing the appearance of an actual sample in accordance with the present invention comprises a color matching system. A color matching system may comprise a scanner or another means for acquiring an electronic image of an actual sample, optionally in combination with a sample preprocessor and/or calibrator. In addition, a color matching system may comprise a processing device, such as a computer, having image analysis software loaded thereon, a component parameter calculator, an area fraction calculator, an optional particle size distribution identifier (PSD-ID), a database matching module, and a processed image database. One skilled in the art may construct a color matching system with, for example, a personal computer having access to local or external database storage and coupled to one or more computer peripheral devices.

When an actual sample is provided for the purpose of reproduction, an electronic image of the sample may be acquired in several ways. A scanner provides high-resolution scanning to acquire a representative electronic image of actual sample, with the electronic image being a set of coordinates in a color space. High-resolution scanning may generally provide adequate representations of samples having relatively flat surfaces (e.g., smooth finishes). Alternatively, a digital camera may be employed to generate the electronic image directly, or a non-digital camera may be employed to generate a photograph that is subsequently scanned with a scanner. For some embodiments of the present invention, image pre-processing may be employed to modify the sample prior to acquiring the electronic image. Image pre-processing may comprise polishing or oiling an actual sample, by machine or by hand. For example, if an actual sample has a textured surface, it may be scanned after polishing or oiling the surface to present a smooth surface to the scanner and to remove interference from reflectance effects. Photography under soft diffuse 45° light may also be employed to generate an electronic image or photograph of textured or metallic finishes.

In acquiring an electronic image of an actual sample, an error in color reproduction called "color shift" often occurs because color input or output devices, e.g. scanners, may work according to different principles. For example, it may happen that if a color sample includes greenish colors and is scanned, the same "color" may look cyanish to the human eye on the screen, and may even be printed as a bluish color. When different devices are addressed with the same control values, often very distinctly different colors are produced by the devices. Control values generally correspond to coordinates in a color space . Accordingly, there exist colors distinguishable by the human eye that look identical to a scanner.

Device calibration to minimize color shift may be practiced in accordance with simulating the appearance of a multicolor surface according to the present invention. A calibrator may be employed to calibrate a scanner so as to generate an electronic image from a color sample that satisfies characteristics or assumptions used by various processing algorithms of system. Thus, if a color sample is scanned with two different scanners, each calibrated by calibrator, both scanners will generate nearly identical electronic images of the sample. For example, calibration of a scanner may set relative color space values, e.g. levels of red, green, blue (RGB) color components of scanned points, based on a predetermined base level. Calibration may also be between spectrophotometric and scanned electronic color values.

Color shift may be preferably minimized by response surface modeling. Response surface modeling may be used to estimate the color shift between sources, based on variables such as position in color space and the difference between contrast and base colors. Response surface modeling is a technique which selects points in color space for measurement, then models the color shift between sources as a function of the coordinates in color space. For example, the magnitude of the color shift may be greater in the blue region of color space. Response surface modeling provides a single equation to predict the magnitude of a color shift as a function of its location in color space and possibly other parameters, such as gloss or texture.

Device calibration by software may employ a correction table or device profile generated from a set of measured reference colors. This device profile is then applied to color components of every individual image by a calibrator. The image correction algorithms are implemented as plugins for image processing software, such as Adobe Photoshop, managed by the computer operating system. For a given software program, color correction is achieved by inputting the appropriate device profile. For a scanner, this procedure generates standard color coordinates, while, for printing, the same procedure is applied using a printer profile to produce printer control values, e.g. RGB values, which are then sent to the printer.

Once an electronic image of a color sample is acquired, the individual color of each color area in the electronic image is separated and identified and is translated into color values that are close matches for each color in the actual sample. Color identification and translation may comprise image analysis. Image analysis may include 1) generation of area proportions of similar color that may be quantified to estimate proportions of color components in the finish; 2) measuring blending effects at the edges of small color areas; and 3) manipulating components of the electronic image to simulate changes such as color or texture effects. For example, the acquired electronic image from a scanner may be stored, and then image analysis software can be used to process the image. One or more image analysis algorithms may be used to separate, identify, and quantize values for each of the colors in the electronic image

In a preferred embodiment of the present invention, an electronic image of an actual sample is processed using image processing application software to separate and identify its component colors. Preferred image processing applications may include Adobe Photoshop for electronic image acquisition and image processing (Adobe Systems Incorporated), SAS for statistical algorithms (SAS Institute Inc., Cary, NC), and Spotfire for visualizing standard colors (Spotfire Inc., Somerville, MA).

Preferably colors are assigned coordinate values in a standard color space. The component colors are translated into color values, e.g. values in a standard color space such as RGB space or (L*, a*, b*) color space, (termed "CIELAB") standardized in 1976 by the CIE (International Commission of Illumination. One skilled in the art may readily extend the present invention to other color spaces that may be employed in a manner consistent with the teachings given herein. Use of standard color space values simplifies the calculation of a color area fraction to measure the amount or density of a given color in the various areas of the electronic image. However, area fractions might not directly correspond to volume proportions of color components for the corresponding multi-component coated finish.

Some color components that are blended to form the multi-component finish material may tend to migrate toward the surface of the coating and appear in higher proportions at the surface of the finish. The relationship between surface area of a color and volume proportion of a coating ingredient may be calibrated using regression techniques based on finishes created from coatings of known composition. Regression analysis may be carried out using commercially available software, e.g. from SAS (SAS Institute Inc., Cary, NC). In addition, blending effects may be accounted for by use of threshold techniques. Threshold techniques may, for example, reduce the number of total color components under consideration to just a few, while labeling lighter areas as white and darker areas as black, to assist in identifying areas of pure color for color component searching.

Once image processing of an electronic image is complete, the component parameters describing the electronic image, e.g. color space values, particle sizes and area fractions, may be input into a search of a database of colors. A database tool, such as ProPal (PROacc systems Ltd., Surrey, UK) and Cyberchrome (Cyberchrome, Branford, CT), may be employed as a database search tool for colors. Achieving realistic reproductions of the appearance of a submitted color sample desirably uses a large database of colors. Preferably, searching a database of colors for existing colors that are close matches for those found in a multicolor surface employs measures generated by statistical methods. Such statistical methods include measures generated by the method of paired comparisons and multidimensional scaling to assess the similarity between the close match generated by the database and the electronic image of the sample.

Once a close match for each color in the multicolor sample has been found in a database of colors, the appearance of a final finish given by formulations of the one or more colors found is preferably simulated in a finish simulator to test how well it matches an electronic image of an actual multicolor sample. The finish simulator may then provide a user with specific formulation and process information to enable the user to make a finish matching the submitted sample. Accordingly, the present invention provides for mass customization of multicolor coated finishes to match the appearance of a submitted multicolor sample. Alternatively, a multi-component finish material formulation comprising each of the one or more colors found, preferably a powder coating, may be manufactured and made into a finish. The final finish there from can be visually assessed for matching the submitted color sample and, if necessary, further modification.

The invention and any one of its elements may be implemented in electronic circuitry, or in computer hardware, firmware, software, or in combinations of them. Apparati used to practice the method of the present invention may be implemented in a computer program product tangibly embodied in a machine-readable storage device for execution by a programmable processor. The methods according to the present invention may be performed by a programmable processor executing a program of instructions to perform functions of the invention by operating on input data and generating output. The invention may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language. Suitable processors include, for example, both general and special purpose microprocessors. Generally, a processor will receive instructions and data from a read-only memory and/or a random access memory. Storage devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks. Any of the foregoing may be supplemented by, or incorporated in, specially-designed ASICs (application-specific integrated circuits).

## Claims

1. A method of simulating the appearance of a single color or a multicolor surface, comprising:
receiving a request describing a desired single color or multicolor surface appearance;
applying said description to a finish simulator to generate one or more simulated appearance samples; and
obtaining feedback on said simulated appearance sample and, if necessary, modifying said sample to simulate said desired surface appearance.

2. The method according to claim 1, wherein said feedback identifies a finish material required to create a finish having said desired appearance.

3. The method according to claim 2, wherein said finish material is a powder coating.

4. The method according to any one of claims 1, 2 or 3 wherein said feedback is provided via a telecommunications network and/or the internet.

5. A method for constructing a finish simulator, comprising:
creating a library of finish templates that have been produced using known chemistry, and
implementing rules to adjust the simulated finish for known changes in chemistry, composition, and application conditions.

6. A method according to claim 5 wherein said finish simulator is a single color or a multicolor finish simulator.

7. A method for reproducing the appearance of a multicolor surface comprising:
separating the multicolor surface into areas of different individual colors;
identifying the individual color of each of said areas;
translating said individual area colors into color values that correspond to those in a database of colors that have been produced;
searching said database for existing colors that are close matches for those in said multicolor surface; and
simulating the appearance of a final finish given by said colors that are close matches for each color in said multicolor surface in a finish simulator.

8. A method for reproducing the appearance of a multicolor surface comprising:
separating the multicolor surface into areas of different individual colors; identifying the individual color of each of said areas;
translating said individual area colors into color values that correspond to those in a database of colors that have been produced; and
searching said database for existing colors that are close matches for each color in said multicolor surface.

9. The method according to claim 8, wherein identifying the individual color of each of said areas comprises calculating area fractions for each color.

10. The method according to claim 9 further comprising simulating the appearance of a final finish given by said colors that are close matches for each color in said multicolor surface in a finish simulator.
